(19) Europäisches Patentamt
European Patent Office
Office européen des brevets

(11) Publication number: 0 324 288 A2

# (12) EUROPEAN PATENT APPLICATION

(21) Application number: 88312466.1

(51) Int. Cl.4: C08G 73/10 , C08J 5/04

(22) Date of filing: 23.12.88

(30) Priority: 13.01.88 GB 8800649

(43) Date of publication of application: 19.07.89 Bulletin 89/29

(84) Designated Contracting States: BE CH DE ES FR GB IT LI NL SE

(71) Applicant: IMPERIAL CHEMICAL INDUSTRIES PLC
Imperial Chemical House Millbank
London SW1P 3JF(GB)

(72) Inventor: Mayo, Richard Andrew
75 Borough Road
Redcar Cleveland TS10 2EQ(GB)

(74) Representative: Downer, John Michael et al
Imperial Chemical Industries PLC Legal Department: Patents PO Box 6 Bessemer Road
Welwyn Garden City Herts, AL7 1HD(GB)

## (54) Thermoplastic polyimides.

(57) A melt stable, thermoformable polyimide having a melt viscosity measured at a shear rate of 1000 $sec^{-1}$ of less than 2 kNs/m comprising a polyimide of repeat unit of formula

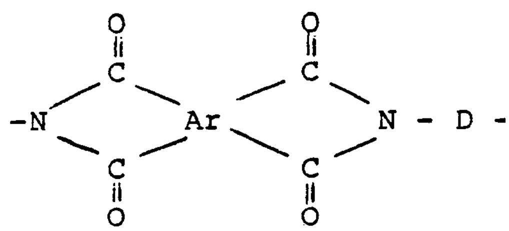

where Ar is a tetravalent aromatic radical derived from a dianhydride or corresponding derivative, selected from pyromellitic dianhydride, benzophenone dianhydride, biphenyl dianhydride, diphenyl ether dianhydride, diphenyl sulphone dianhydride and hexafluoropropylidene diahydride and D is a divalent organic radical derived from amines of formula

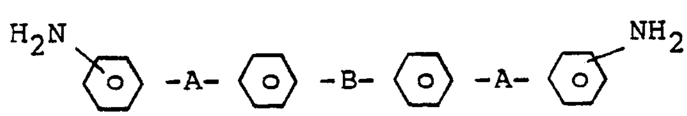

where A is O or S, the terminal covalent bonds are in meta positions with respect to A and B is $-SO_2-$, -CO-, or a direct link,

EP 0 324 288 A2

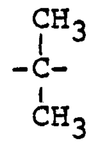 , 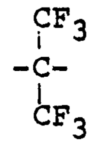

and wherein up to 50 mole % of the radicals D may be replaced by divalent organic radicals derived from other diamines characterised in that the end groups in the polyimide are essentially all unsubstituted aromatic rings. The products are useful for injection moulding, extrusion, for forming films and fibres and as the matrix for reinforced composites.

*Fig. 1.*

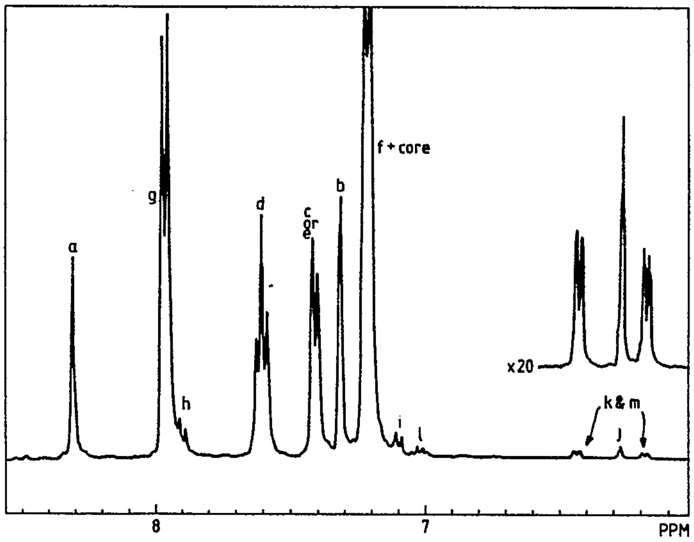

## THERMOPLASTIC POLYIMIDES

This invention relates to melt stable polyimide polymers which are repeatedly thermoformable and to reinforced composites in which the polyimide forms the matrix polymer.

A variety of polyimide polymers have been previously described. Predominantly, these have used the readily available pyromellitic dianhydride (PMDA) condensed with a variety of aromatic diamines. Whilst most aromatic diamines produce polyimides which are not melt fusible European Patent 0 122 060 describes melt fusible polyimides consisting essentially of the following repeating units (N)

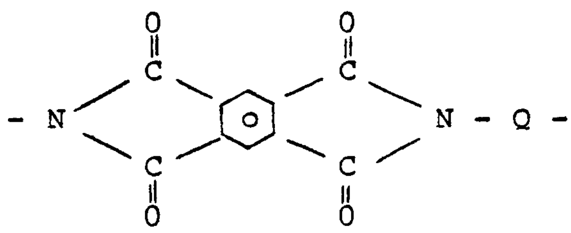 (N)

where Q in each repeating unit, independently of any other unit, is a divalent organic radical selected from the following:

(a) 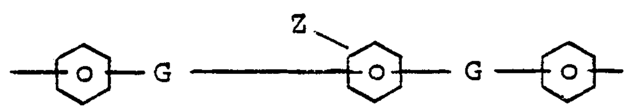 ,

where G is 0 or S, and Z is hydrogen or phenyl; and, when Z is hydrogen, both terminal covalent bonds are either in the ortho or meta position with respect to G; while, when Z is phenyl, both terminal covalent bonds are in ortho, meta, or para position with respect to G;

(b) 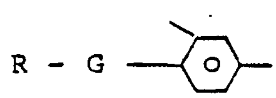

where G is 0 or S; and R is phenyl, biphenyl, or naphthyl;

(c) 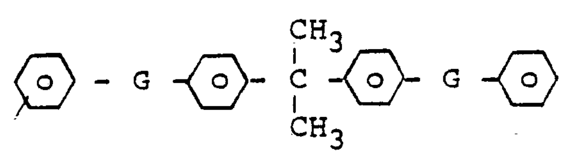

where G is 0 or S and both terminal covalent bonds are in the ortho or meta position with respect to G; and

(d) 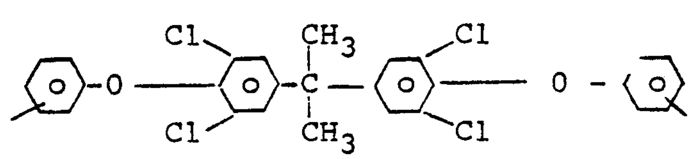

European Patent 0 122 060 emphasizes the difficulty of obtaining PMDA-based, wholly aromatic polyimides which are melt fusible and which have sufficiently low viscosity below their decomposition point to be fabricable, allowing the evolution of gas and removal of voids in a pressing process, have good physical properties when cured and have good oxidative stability.

A class of polyimide compositions have now been found which when produced under controlled conditions give polymers having properties characteristic of a thermoplastic polymer.

According to the invention there is provided a melt stable, thermoformable polyimide having a melt

viscosity measured at a shear rate of 1000 $sec^{-1}$ of less than 2 $kNs/m^2$ comprising a polyimide of repeat unit of formula

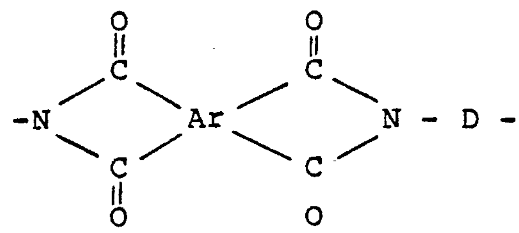

where Ar is a tetravalent aromatic radical derived from a dianhydride, or corresponding derivative selected from pyromellitic dianhydride, benzophenone dianhydride, biphenyl dianhydride, diphenyl ether dianhydride, diphenyl sulphone dianhydride and hexafluoropropylidene diahydride and D is a divalent organic radical derived from amines of formula

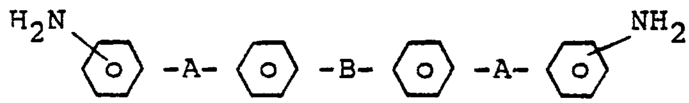

where A is O or S, the terminal covalent bonds are in meta positions with respect to A and B is $-SO_2-$, -CO-, a direct link,

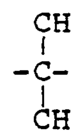 , or 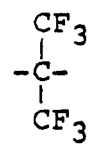

and wherein up to 50 mole % of the radicals D may be replaced by divalent organic radicals derived from other diamines characterised in that the end groups in the polyimide are essentially all unsubstituted aromatic rings.

Surprisingly, the polyimide of the invention is truly thermoformable in the sense of being repeatedly formable when held at elevated temperature. Thus not only can shaped articles be formed at processing temperatures of the order of 400°C, but the material remains sufficiently thermoformable, that is the polymer remains sufficiently linear, to be thermoformed in further high temperature thermoforming operations. Thus the polymer can be treated as a truly thermoplastic material.

The polymers may be of such high molecular weight that the appropriate thermoforming technique is coalescence under pressure and heat. Preferably the polymers of the invention are of sufficiently low melt viscosity to be used for conventional injection moulding or for melt impregnation of fibrous structures. The characteristic which distinguishes the polymers of the invention from prior art polyimides of the same repeat units is the melt stability of the polymer. The melt stable polyimides of the invention exhibit a melt viscosity under defined conditions which increases by less than 25%, and generally less than 15%, over a period of 30 minutes when held in molten form. Polyimides which exhibit an increase of less than 10% in melt viscosity after 1 hour at elevated temperature can be prepared.

The preferred polyimide polymer used in the invention is essentially linear even when fully ring closed and is substantially free from residual reactive groups such as anhydride, acid, amide or amine end groups. By "essentially linear" is meant that although the polymer may be branched to a limited extent it must be essentially free from cross-links which would render it no longer melt processible at temperatures below the decomposition temperature of the polyimide.

By being "substantially free from residual reactive groups such as anhydride, acid, amide or amine end groups" a melt stable polymer will be obtained. Preferably, the number of functional end groups in the polyimide is less than 1.5 per 100 repeat units in the polyimide. The preferred process for making a polyimide according to the invention which is melt processible comprises reacting a slight excess of either the dianhydride or the diamine components and end-capping with a suitable monofunctional reagent. It is preferred that an excess of terminal amine groups are present in the initial reactants and that the terminal

amine groups are end-capped, using, for example, phthalic anhydride or a phthalic acid ester so that the polyimide end groups are essentially all unsubstituted aromatic groups.

In order to obtain polyimides having the required melt stability it is necessary to end cap under specific conditions to ensure that the end groups are essentially all unsubstituted aromatic rings. Thus whereas EP 122 060 contains a general teaching as to using end-capping to enhance the melt stability of the product, and contains Examples demonstrating the use of end-capping agents, in those Examples where the melt stability of the polyimides of EP 122 060 was reported they did not attain the melt stability of the polyimides of the present invention.

EP 122 060 describes a procedure in which no end capping agent is used but a substantially melt stable polymer is obtained through a ring closing reaction in the presence of acetic anhydride. When that procedure is applied to the different polyimides of the present invention a polymer showing very marked melt instability is obtained. If chemical imidisation is used in preparing the polymers of the present invention they should also be end capped to provide the required melt stability.

The polyimides of the invention are the condensation products of a dianhydride or corresponding diester diacid selected from pyromellitic dianhydride (PMDA), benzophenone dianhydride, biphenyl dianhydride, diphenylether dianhydride and diphenyl sulphone dianhydride with at least one aromatic diamine as hereinbefore defined.

In order to provide the polyimides of the invention with properties of thermoformability and melt stability the aromatic diamines must be of the selected class hereinbefore defined.

Preferably the aromatic diamines of this class are selected from 4,4′-bis(3 amino phenoxy) diphenyl sulphone, 4,4′-bis(3 amino phenoxy) benzophenone, 4,4′-bis(3 amino phenoxy) biphenyl, 2,2′-[bis(3 amino phenoxy) phenoxy] propane, 2,2′-[bis(3 amino phenoxy) phenyl] hexafluoropropane.

The other aromatic diamines which can be used to the extent of replacing up to 50 mol % of the above specified diamines may be selected from any diamine, preferably an aromatic diamine, such as 4,4′-diaminodiphenyl sulphone, 3,3′diaminodiphenyl sulphone, 3,4′diaminodiphenyl sulphone, 4,4′diamino benzophenone, 3,3′diamino benzophenone, 3,4′diaminobenzophenone, 4,4′diaminodiphenyl ether, 3,3′-diaminodiphenyl ether, 3,4′diaminodiphenyl ether, 4,4′diaminodiphenyl methane, m-phenylene diamine, p-phenylene diamine, o-phenylene diamine, 4,4′bis(4 amino phenoxy) diphenyl sulphone and 1,3 bis(3 amino phenoxy) benzene.

At least 50 mol %, and preferably at least 60 mole %, of the total diamine content used to form the polyimide should be a diamine of the specified class. Other diamines may be present, and may be usefully employed when it is required to increase the glass transition temperature (Tg) of the polyimide produced. Increases in Tg may have adverse effects on processability. On the other hand chemical and environmental resistance may be improved and the ultimate choice of co-reactant amine, if any, will depend on the intended application.

A preferred polyimide is the condensation product of pyromellitic dianhydride with 4,4′-bis(3 amino phenoxy) diphenyl sulphone. Optionally, this diamine may be replaced by up to 50 mole % of at least one of any of the other diamines listed above.

The condensation reaction between the dianhydride with the diamine is preferably carried out in a dipolar, aprotic solvent such as N-methylpyrollidone and dimethyl formamide. Mixtures of dipolar aprotic solvents may be used. Other polar solvents such as dimethyl acetamide may be used. Mixtures of solvents one of which is not a dipolar aprotic solvent may be used. In a preferred procedure the dianhydride is first esterified with an alcohol to form a diester diacid. The dianhydride or, if used, the diester diacid is reacted with the aromatic diamine prior to being cyclised to the polyimide with evolution of water (and alcohol in the case of the diester diacid.

It has been found to be surprisingly advantageous to complete the cyclisation reaction and to end cap the polymer whilst the polymer is in solution. Preferably a high boiling solvent is used to keep the polyimide in solution until the cyclisation reactions are completed at elevated temperature, in excess of 100° C. The procedure is distinctly advantageous over conventional procedures in which the cyclised polyimide precipitates out in solid form during the cyclisation process.

In order to obtain products of the required melt stability it is generally necessary to use an excess of end-capping agent over that required for theoretical conversion of the calculated molar excess of functional end groups. When the reactants contain an excess of amine reactant the concentration of monofunctional end capping agent such as phthalic anhydride must be in excess of the calculated amine functionalities. It may be necessary to use as much as a 200% molar excess of end-capping agent to obtain the required melt stability when the end-capping reaction is done under conditions where the cyclised polymer comes out of solution as it is formed or when cyclisation is performed in solution but at low temperature. When the polymer is kept in solution at elevated temperature during cyclisation much less end-capping agent can be

used to obtain satisfactory melt stability. Under these conditions a 50% molar excess gives excellent stability and as little as a 25% molar excess can be used.

An advantage of the products of the present invention is that because the chemical reactions are virtually complete little or no provision needs to be made for removing evolved condensation by-products.

The reaction conditions can be controlled to produce polyimides over a wide range of molecular weight. It is convenient to characterise these materials in terms of the melt viscosity of the polymer because that determines the use for which the polymer is suitable. The melt viscosity should be less than 2 $kNs/m^2$. Products having a melt viscosity (measured at a shear rate of 1000 $sec^{-1}$) of greater than 1.0 $kNs/m^2$ are not readily processible by techniques such as injection moulding although they may be suitable for fabrication by other methods such as extrusion or compression moulding. For easy injection moulding the polymers should have a melt viscosity of less than 0.5 $kNs/m^2$, desirably less than 0.3 $kNs/m^2$. The minimum value for injection moulding is at least 0.05 and preferably at least 0.1 $kNs/m^2$. When the polymer is to be used for melt impregnation of fibrous structures, such as carbon filament rovings the viscosity of the impregnating medium is desirably in the range 0.025 to 0.1 $kNs/m^2$ and this is achieved using a diluent, preferably a diluent effective in the molten state.

When the polymer is used as the matrix for a reinforced composite the property of thermoformability gives the composite material greater versatility than other polyimide based composite materials because it is possible to supply the fabricator with a composite in which the chemistry (evolution of volatiles) has been completed, rather than requiring the fabricator to deal with the problem of performing the chemistry and removing the volatiles (and voids) during the fabrication of shaped parts.

The reinforcing filaments used in producing reinforced composites are preferably continuous, collimated filaments in the form of a web of unidirectional filaments, or in the form of woven fabrics. The filaments are preferably of glass, graphite, high modulus synthetic organic polymer filaments such as aramid filaments, or inorganic fibres such as alumina fibres.

The reinforced composite material may include additives such as stabilisers, fillers and pigments and short fibre reinforcing materials, that is fibres of length less than 3 mm.

The impregnation of fibrous structures can be performed in a number of ways, using either a solution of the melt stable polyimide or a solution of the precursors leading to the melt stable polyimide so that the eventual matrix of the composite after completion of the cyclisation reactions and removal of solvent will be the melt stable polyimide.

In these procedures a fibrous structure of continuous collimated, filaments in unidirectional or woven fabric form is impregnated in a continuous process by passing the structure through a solution of the melt stable polyimide or precursor thereof, urging the impregnated structure against a succession of heated surfaces, the temperatures of the surfaces being controlled and the position of the surfaces being located whereby both sides of the impregnated structure are in turn urged against the heated surfaces to cause condensation and cyclisation of any precursor materials and evolution of the solvent and any volatile by-products whilst urging the impregnated structure against the heated surfaces at a temperature which maintains the polyimide matrix in molten form.

In one impregnation procedure using a precursor impregnant a fibrous structure of continuous, collimated filaments in unidirectional or woven fabric form is impregnated in a continuous process by passing the structure through a solution of a mixture of a diester diacid derivative of at least one of the specified dianhydrides, at least one of the essential specified diamines, such as 4,4′-bis(3 amino phenoxy) diphenylsulphone and an excess of a monofunctional end-capping reagent, urging the impregnated structure against a succession of heated surfaces, the temperatures of the surfaces being controlled and the position of the surfaces being located so that both sides of the impregnated structure are in turn urged against the heated surfaces and the reactants condense, the solvent and volatile by-products being substantially completely removed by urging the impregnated structure against the heated surfaces at a temperature which maintains the polyimide produced in molten form.

The steadily increasing temperature profile of the series of heated surfaces and the positive urging of the impregnated structure against the heated surfaces enables a composite to be obtained consisting of an essentially fully cured polyimide matrix, continuous collimated filaments which are essentially completely contacted by polymer and a substantially void-free composite structure. Because the nature of the polyimide produced is characteristic of a thermoplastic any further consolidation necessary can subsequently be achieved by re-heating the composite to a temperature at which the polyimide flows and applying pressure to the composite. Temperatures of greater than 325 °C, preferably greater than 350 °C. Pressures of greater than 100 psi, preferably greater than 200 psi are desirably employed, but in some instances pressures of 50 psi or less have been found to be effective in giving satisfactory products.

The polyimides of the invention can be used to produce continuous fibre reinforced composites using

the melt impregnation procedures described in European Patent Publication No. 102159.

This ability to flow at elevated temperatures enables shaped articles to be formed from sheets of the composite by the fabrication techniques which have been developed for composites containing continuous filaments. The conditions used in these fabrication techniques provide a further opportunity for the removal of residual volatiles and reducing the risk of voiding.

The polyimide of the invention can be used in its own right to form films and fibres. An advantage of the polyimides of the invention is that films and fibres can be formed in a process involving extrusion from a melt of the polymer rather than necessitating the use of a solvent thus avoiding the subsequent problem of removing the solvent from the film or fibre.

When the polymer is used as an injection mouldable material a variety of additives may be incorporated in the material by conventional compounding techniques. These include additives which are used at relatively low concentration such as UV stabilisers, pigments, lubricating agents and mould release agents. Additionally, reinforcing and non-reinforcing fillers may be used at relatively high concentration although it will be appreciated that these increase the processing difficulties because of the increase in melt viscosity which arises. Fibrous fillers, particularly glass and carbon fibres are particularly useful fillers. The fillers, particulate or fibrous, may be included at concentrations between 2 and 70% by weight of polyimide composition.

When a reinforced injection mouldable composition is required a grade of exceptionally high performance can be obtained by chopping continuous rovings which have been thoroughly wetted by the polyimide of the invention into short lengths as required, for example, into pellets of length from 2 to 50 mm. In these pellets the glass fibre length is that of the length of the chopped granule and is retained to a substantial extent when the pellets are moulded. The resultant shaped article consequently contain longer lengths of reinforcing fibre that when formed from an extrusion compounded form of fibre reinforced granule because the mere act of incorporating the fibre into the polymer causes substantial breakage of the fibres.

The number of amine end groups per 100 repeat units can be determined by the following procedure.

In order to apply a $^1$H NMR method for the determination of amine end groups in a polymer of the invention a polymer was dissolved in deuterated dimethyl sulphoxide at a concentration of 10 w/w %. The polymer solution was maintained at a fixed temperature between 80°C and 100°C when the NMR spectrum was taken. The spectrometer conditions were as follows:

Spectrometer: JEOL GX400, 400 MHZ for $^1$H NMR. Spectral width 6000 Hz, 15 ppm; broadening factor zero; 90° pulse; 0.1 sec pulse delay; acquisition time 2.73 seconds, and typically a few hundred scans were accumulated. 32K points were Fourier transformed and the central line of the deuterated dimethyl sulphoxide resonance was taken as 2.49 ppm for chemical shift referencing.

Figure 1 shows the region of the spectrum associated with hydrogens in aromatic residues and the proposed assignments are:

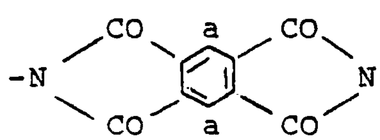

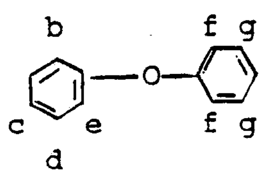

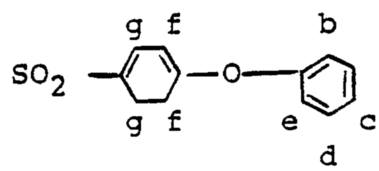

and

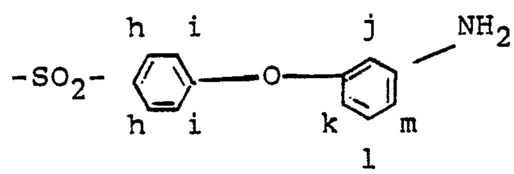

The table below shows the assignments given to each of the proton shifts.

| Hydrogen Type | Chemical Shift (PPM) |
|---|---|
| a | 8.28 |
| g | 7.95 |
| d | 7.59 |
| c or e | 7.40 |
| b | 7.30 |
| f + c or e | 7.20 |
| h | 7.88 |
| i | 7.10 |
| l | 7.04 |
| k & m | 6.20 & 6.44 |
| j | 6.29 |

The resonance at 7.40 ppm and the three resonances at 6.20, 6.29 and 6.44 ppm are integrated with the integration package of the spectrometer. If the values of these integrals are $I_P$ and $I_E$ respectively then the number of amine end groups per 100 polymer repeat units is calculated as

$$\frac{\frac{I_E}{3}}{\frac{I_P}{2}} \times 100$$

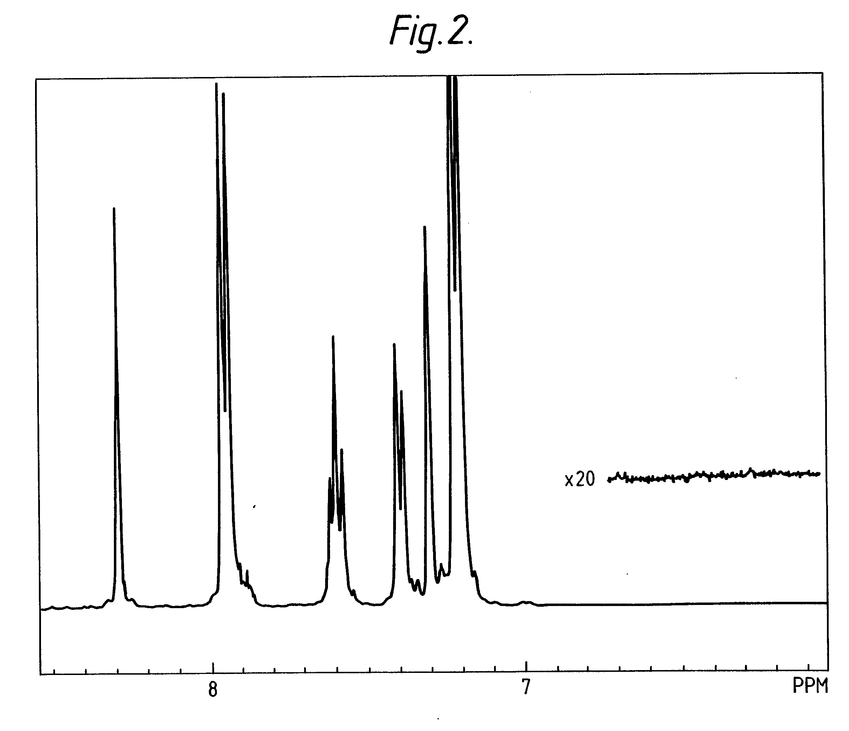

Figure 2 shows a spectrum of a polymer of this type with a considerably lower level of amine end groups that were found for the polymer whose spectrum is shown in Figure 1. The method can be adapted for other polymers within the invention.

Melt viscosities of the polymers exemplified were measured on a ram extruder operating at a shear rate of 1000 s-1 and using a 0.5 mm die. The temperature in the extruder barrel was generally 370° C and the initial viscosity was recorded after a hold up time of 5 minutes. Measurements were then made every five minutes until the initial 5 gram charge of polymer was exhausted, or until a melt viscosity of 2 kNs/m$^2$ or greater was recorded.

The invention is further illustrated with reference to the following examples.

## EXAMPLE 1

To a 250 ml, 3 necked round bottomed flask fitted with an $N_2$ inlet, mechanical stirrer and drying tube is added dry dimethylacetamide (80 ml), 4-4′ bis (3 aminophenoxy) diphenylsulphone (0.02 mol, 8.65 g) and 4-4′ diaminodiphenylether (0.005 mol, 1.00 g) are added to the flask. Once dissolution had occurred, pyromellitic dianhydride (0.02475 mol, 5.40 g) and phthalic anhydride (0.001 mol 0.148 g) were added, and stirring continued for 3 hours.

The polyamide acid is isolated by slowly pouring the solution into 400 ml of water contained in a Waring Blender. The resulting white, fluffy material is retrieved by filtration and given three washes with water before being dried overnight under vacuum at 100° C. The polyamide acid is converted into polyimide by further heating the powder to 200° C for six hours.

The resulting yellow polyimide powder had an inherent viscosity of 0.30 dl/g (0.5% solution in conc. $H_2SO_4$). The procedure was repeated to provide enough polymer for testing. The powder was compression moulded at 400° C to give a tough, void-free test pieces of dimensions 150 mm x 50 mm x 3 mm.

The Tg was measured by DSC to be 268° C (reheat scan) and by DMA to be 262° C.

The compression moulded test pieces of this polymer were found to have the following mechanical

properties.

| | |
|---|---|
| Flexural Strength | 100 MPa |
| Flexural modulus | 3.1 GPa |
| $G_{IC}$ | 1.43 kJ/m$^2$ |
| $K_{IC}$ | 1.63 MN/m$^{3/2}$ |
| Compressive Yield Strength | 154 MPa |

## EXAMPLE 2

To a two litre round bottomed flanged flask fitted with $N_2$ inlet was added pyromellitic dianhydride (1.0395 mol, 226,74g) phthalic anhydride (0.021 mol, 3.11g), N-methylpyrrolidone (NMP) (253 mls) and ethanol 2.10 mol, 98.87g). During the resulting exotherm, all the anhydride dissolved, and the temperature rose to about 105°C. The contents of the flask were allowed to cool to 60°C, when 4-4′ diaminodiphenylether (0.21 mol, 42.05g) and 4-4′ bis (3-aminophenoxy) diphenylsulphone (0.84 mol 363.30g) were washed in with 126 ml of N-methyl pyrollidone (NMP). The contents of the flask are stirred for 2 hrs at 80°C to give a homogeneous solution.

This solution was allowed to cool to ambient temperature before it was poured into a tank through which 25 tows of Hercules AS4 6K graphite fibre were passed. The tows were passed under a steel bar to push them through the impregnating solution. From here, the tows were passed through a pair of nip rollers, heated to 150°C, over a roller at 175°C and finally under and over two rollers both at 400°C.

As the impregnated fibre tows passed over the roller, the NMP solvent evaporated, and the monomers lost ethanol and water to give cured polymer in situ. The tows were in contact with the rollers for 2 minutes.

The resulting prepreg was a well consolidated 6 inch wide tape with no splits or surface impregnation. The volatile content of the tape was measured at 0.4%.

A DSC scan of the prepreg showed a glass transition temperature of 268°C, identical to that of the neat resin.

The dry, boardy prepreg obtained in this way was compression moulded into well-consolidated, void-free laminates by stacking 16 plies of prepreg into a matched metal mould.

The mould was placed between platens heated to 360°C. The platens were closed on the mould but no pressure was applied until the platens had returned to 360°C. After a further period of 5 minutes a pressure of 1800 psi was applied to the platens for a period of 15 minutes. After cooling the press the consolidated laminates were tested using standard test methods.

The laminate produced, having a thickness of 2.5 mm, was cut into specimens both along the longitudinal direction of the fibres and transverse to the direction of the fibres. Samples longitudinal to the fibre direction were cut to have dimensions 30 mm long (in the fibre direction) and 8 mm wide. Transverse samples were cut to have dimensions 45 mm long (transverse direction) and 10 mm wide. Short beam shear strength (SBSS) was measured on the longitudinal samples according to the method of ASTM D2344-72 using a loading nose diameter of 6.35 mm, a support nose diameter of 3.2 mm and a span to depth ratio of 5:1. Transverse flexural strengths (TFS) were measured according to ASTM D790 using a cross-head speed of 1 mm/minute, a span of 40 mm, a loading nose diameter of 5 mm, a support nose diameter of 5 mm.

The properties obtained are recorded below:

| | |
|---|---|
| Transverse Flexural Strength | 130 MPa |
| Short Beam Shear Strength | 91.6 MPa |
| 0° Flexural Strength | 1855 MPa |
| 0° Flexural Modulus | 126 GPa |
| $G_{IC}$ | 0.98 kJ/m$^2$ |
| TFS after conditioning for 14 days at 100°C in water | 89 MPa |

## EXAMPLE 3

8 plies of prepreg (200 mm x 150 mm) prepared according to the process of Example 4 were laid up in quasi-isotropic fashion were preheated to 390 °C and then formed into a W-section in a W-section tool in a 48 cm diameter SAAB 'Fluid-form' press at a machine oil pressure of 200 bar (equivalent to 6820 psi on the lay up). A good quality section was obtained.

The retention of thermoformability of the composite material was demonstrated by placing the cooled section between platens held at 400 °C. On closing the platens a flat sheet showing no buckling was produced.

## EXAMPLE 4

To a one litre round bottomed flanged flask fitted with $N_2$ inlet, mechanical stirrer, thermocouple and a 50 ml capacity Dean/Stark trap was added 4-4′ bis (3-aminophenoxy) diphenylsulphone (112.45 g, 0.26 moles), diphenylsulphone (270 g) and toluene (150 mls). The temperature of the flask contents was raised by means of a hot oil bath to 75 °C, when a clear homogeneous solution was obtained. To this solution was added pyromellitic dianhydride (54.53 g, 0.25 moles), which was washed in with 30 grams of diphenyl sulphone and 25 mls of toluene. The resulting pale yellow slurry was held at 70-80 °C for one hour with continuous stirring.

The temperature was then raised to 85 °C and held in the range 80-90 °C for one hour. Phthalic anhydride (4.4436 g, 0.03 mol) was added to the reaction vessel and washed through with 25 mls of toluene. The temperature of the reaction flask was raised to 126 °C, when good reflux was obtained into the Dean/Stark trap and water began to collect. Once the flask contents reached 130 °C, a homogeneous solution was obtained. Over a period of two hours, the contents' temperature was gradually raised 150 °C, at which point evolution of $H_2O$ was no longer perceptible. Over the next hour, the flask contents were raised to 210 °C and toluene was continuously distilled out. The flask contents were held at 250 °C for one hour, before being cast into an aluminium tray to cool.

The resulting solid diphenylsulphone/polymer mixture was broken up using a hammer mill, and the diphenylsulphone removed by washing with five 2 litre portions of acetone. The polymer was then dried overnight at 80 °C (under vacuum), then heated to 300 °C for one hour (under vacuum).

The resulting polymer could be compression moulded at 350 °C into a tough, clear film, with an inherent viscosity in concentrated $H_2SO_4$ (polymer concentration = 0.5 g/100 ml) of 0.35.

When placed in the ram extruder at 370 °C, an initial melt viscosity of 0.61 kNs,/$m^2$ was found, which rose to 0.64 kNs/$m^2$ after a further 55 minutes, representing an increase of 5%.

No increase was seen over a 30 minute period from the initial measurement.

The number of amine end-groups in the polymer was found to be less than 0.1/100 repeat units by the NMR method described.

## EXAMPLE 5

The polymer of Example 4 was used to produce a continuous, unidirectional carbon fibre prepreg using the procedure described in Example 1 of European Patent 102 159 Publication.

Using a procedure of this type, 2 inch wide tape consisting of essentially continuous collimated AS4 fibres in a thermoplastic polyimide matrix was prepared, in which there were few splits or surface imperfections. Examination by optical and electron microscopy of a cross section of the prepreg revealed that the individual fibres were well wetted and coated with resin, that the fibres were well distributed within the matrix, and that few voids were present.

Twelve six inch lengths of this tape were stacked in a 6 inch x 2 inch matched metal mould between 0.25 mm aluminium foil which had been treated with a commercial mould release agent, and placed between the platens of a press which had been heated to 380 °C. The platens were closed on the mould without any pressure being applied. After fifteen minutes, when the temperature of the platens had returned to 380 °C, a pressure of 50 tons was applied and maintained for another fifteen minutes. The platens and mould were colled to 30 °C, the mould removed from the press, and a well consolidated laminate

recovered.

The flexural strength transverse to the fibre direction for this laminate was found to be 90 MPa.

## EXAMPLE 6

A 250 ml, 3 necked, round bottomed flask was fitted with an $N_2$ inlet, a mechanically driven anchor stirrer and a drying tube, and purged with dry nitrogen gas. 4,4′bis (3-aminophenoxy) diphenylsulphone (11.25 grams, 0.026 mol) was weighed and added to the flask, followed by 60 grams of dimethylacetamide. Stirring was commenced to effect complete dissolution, at which point pyromellitic dianhydride (5.45 grams, 0.025 mol) was added in a single portion. A cold water bath round the flask was used to control any exotherm. The residual PMDA was washed into the flask with a further 60 grams of dimethylacetamide and the reaction stirred for two hours. At this point a 200% excess of phthalic anhydride (0.8887 grams, 0.006 mol) was added, and the reaction stirred for a further two hours. An aliquot of the viscous solution was removed, diluted to 1% solids with DMAc, and the reduced viscosity found to be 0.48 dl/g. The remaining solution was precipitated into water contained in a Waring Blender to give a white, fibrous polymer which was washed with three one litre portions of demineralised water and then dried under vacuum at 80 °C for fifteen hours, 200 °C for five hours and 300 °C for one and a half hours. The resulting congealed, yellow polymer could be broken to a powder by using for example a hammer mill. The polymer was compression moulded at 350 ° to give a transparent yellow/orange film which could be hinged without breaking. The film was soluble in concentrated sulphuric acid and an inherent viscosity of 0:40 at 0.5% concentration was recorded. Analysis of the film by differential scanning calorimetry revealed an onset of Tg of 254 °C. A 5 gram portion of the polymer was placed in a ram extruder at 370 °C and the melt viscosity measured as 0.91 kNs,/m$^2$; after 55 minutes in the instrument a melt viscosity of 1.06 kNs/m$^2$ was measured, representing an increase of 17%. The increase over 80 minutes was 8.6%.

The hammer milled polyimide powder was analysed to determine the number of amine end groups by the technique previously described. A value of 0.5 amine end groups per 100 repeat units was determined.

## Comparative Example A

The procedure described in Example 6 was repeated with the exception that no phthalic anhydride was added to the reaction flask. After stirring for four hours, an aliquot of the viscous solution was removed, diluted to 1% solids and found to have a reduced viscosity of 0.50 dl/g. The polymer was isolated, dried and imidised using the procedures described in Example 1 to give a yellow polymer powder. The polyimide was found to have 4.8 amine end groups per 100 repeat units. A portion of the yellow powder was compression moulded at 350 °C to give a brown transparent film which dissolved in concentrated sulphuric acid, an inherent viscosity of 0.43 being measured on a 0.5% solution. Differential scanning calorimetry showed a Tg onset of 254 °C. A 5 gram portion of polymer powder was placed in a ram extruder at 370 °C and found to have a melt viscosity greater than 2 kNs/m$^2$.

## Comparative Example B

To the apparatus described in Example 6, 4,4′ bis (3-aminophenoxy) diphenylsulphone (10.81 grams, 0.025 mol) and dimethylacetamide (60 g) were added. Stirring was commenced to effect complete dissolution, at which point pyromellitic dianhydride (5.67 grams, 0.026 moles) was added and washed in with 20 grams of dimethylacetamide. The reaction was stirred at 23 °C for four hours to give a polymer with a reduced viscosity of 0.51 dl/g. The polymer was isolated, dried and imidised in the way described in Example 1 to give a yellow powder. The polyimide was found to contain 0.1 amine end groups per 100 repeat units. Compression moulding at 350 °C gave a brown film which had an inherent viscosity of 0.48. A 5 gram sample of polymer was placed in a ram extruder at 370 °C and found to have a melt viscosity of greater than 2 kNs/m$^2$.

## Comparative Example C

The procedure described in Example 2 of Japanese patent publication 48-18960 was followed in this example. 10.8 grams of 4-4′ bis(3 aminophenoxy) diphenylsulphone plus 50 grams of N-methylpyrrolidone plus 50 grams of dimethylacetamide were introduced into a three necked, 250 ml round bottomed flask fitted with an $N_2$ inlet, mechanical stirrer and drying tube. With stirring of the flask contents, there was added at 10°C 5.45 grams of pyromellitic dianhydride. At the end of the addition stirring was continued for five hours at 10-15°C. The polymer was isolated as described in Example 1, dried for fifteen hours at 80°C under vacuum, then heated to 200°C for five hours under vacuum and finally heated to 280°C for one hour under vacuum. This polymer was found to contain 3.0 amine end groups per 100 repeat units. A film compression moulded at 350°C from this polymer had an inherent viscosity of 0.57 measured in concentrated sulphuric acid at a concentration of 0.5%. A five gram sample of polymer was placed in a ram extruder at 370°C and found to have an initial melt viscosity of 1.76 kNs/$m^2$ which rose to greater than 2.0 kNs/$m^2$ in under 10 minutes.

## Comparative Example D

To the apparatus described in Example 6, 4-4′bis (3 aminophenoxy) diphenylsulphone (22.27 grams, 0.0515 mol) and dimethylacetamide (130 grams) were added. Stirring was commenced to effect complete dissolution, at which point pyromellitic dianhydride (10.91 grams, 0.05 mol) was introduced in a single addition. A further 30 grams of dimethylacetamide was added to wash residual pyromellitic dianhydride into the reaction flask. The flask contents were stirred for two hours, at which point phthalic anhydride (0.4444 grams, 0.003 mol) was added. This represented a stoichiometric amount of end capping agent. Stirring was continued for a further hour to give a polymer solution of relative viscosity of 0.59 dl/g as measured in dimethylacetamide at 1% concentration. The polymer was isolated, dried and ring-closed as described in Example 1 to give a yellow powder. This powder contained 2.3 amine end groups per 100 repeat units. A compression moulded film of this polymer produced at 350°C had an inherent viscosity of 0.5% concentration in concentrated sulphuric acid of 0.44. A five gram sample of this polymer was placed in a ram extruder at 370°C and an initial melt viscosity of 0.82 kNs/$m^2$ was measured. After a further 50 minutes this had risen to 1.77 kNs/$m^2$, representing an increase of 116%. After a period of 30 minutes from the initial measurement a melt viscosity of 1.20 kNs/$m^2$ (46% increase) was observed.

## EXAMPLE 7

A three necked 250 ml round bottomed flask was charged with 4-4′bis(3-aminophenoxy)-diphenylsulphone (22.49g, 0.052 moles), diphenylsulphone (54g) and toluene (30 mls). The flask was sparged with nitrogen and fitted with a mechanical stirrer and a condenser. The temperature of the flask contents was raised to 90°C by means of a hot oil bath, at which point 3,3′-4,4′ biphenyltetracarboxylicdianhydride (14.71g, 0.05 moles) was added in a single addition and washed in to the flask with a further 6 g of diphenylsulphone and 10 mls of toluene. The flask contents were maintained between 80 and 90°C for 20 minutes then phthalic anhydride (.8887g 0.006 moles) was added and washed through with a further 5 mls of toluene.

The condenser was removed from the flask and replaced by a 10 ml capacity Dean and Stark trap. Over a period of approximately one hour the temperature of the flask contents was raised to 135°C during which time toluene began to distil from the flask into the Dean and Stark trap removing water of reaction as an azeotrope. Over a period of a further two hours the flask contents temperature was raised to 195°C and the bulk of the toluene removed from the system. At this point the Dean and Stark trap was removed from the flask and replaced by a stillhead and condenser. Over a period of 30 minutes, the flask contents was raised to 250°C and held there for one hour. The resulting yellow, viscous solution was cast onto an aluminium tray and left to cool and then broken up using a hammer mill to give a pale yellow granular solid. The solid was washed with five x 500 ml portions of acetone and then dried in a vacuum oven for three hours at 150°C. The powder was then further heated to 300°C for 1.5 hours under vacuum before being compression moulded at 350°C to give a pale yellow moulding.

A 5 g sample of the polymer was placed in a ram extruder with a barrel temperature of 370 °C and found to have an initial melt viscosity of 0.30 kNs/m$^2$ at a shear rate of 1000 s$^{-1}$, which rose to 0.32 kNsm$^2$ over a period of 40 minutes, representing an increase of 6%.

## Comparative Example E

The chemical imidisation procedure described in European Patent Application 122 060 was followed replacing the 1,3 bis(3 amino phenoxy)benzene with 4,4′bis (3-amino phenoxy) diphenyl sulphone (m-ESEDA). 5% excess diamine was used.

m-ESEDA (22.68g, 0.0525M) was dissolved in anhydrous dimethyl acetamide (200 ml) under nitrogen with mechanical stirring. PMDA 10.91 g, (0.05M) was added at room temperature and washed in with dimethyl acetamide (20 ml). The reaction mixture was stirred at 18 °C for 3.5 hours. A sample of the polyamic acid solution (50 ml) was precipitated into demineralised water, washed with water (3x) and dried at 110 °C overnight. A 1% solution of the polyamic acid in dimethyl acetamide had an RV of 0.21 dlg$^{-1}$. The remaining polyamic acid solution was added dropwise to a stirred solution of dimethyl acetamide (50 ml), pyridine (50 ml) and acetic anhydride (50 ml, 0.525M) at 80-95 °C. After 1 hour at 100 °C the solution was left to cool overnight. The precipitated polyimide was filtered and washed with boiling methanol (3x500 ml) and dried at 110 °C in vacuo overnight. A film moulded at 350 °C had an IV of 0.32 dlg$^{-1}$ in $H_2SO_4$.

The polymer showed poor melt stability at 370 °C in a ram extruder using a shear rate of 1000 sec$^{-1}$. A sample dried at 300 °C for 3 hours was also examined.

| Time (mins) | Viscosity (kNsm$^{-2}$) | |
|---|---|---|
| | (dried 110 °C) | dried 300 °C) |
| 5 | 0.42 | 0.48 |
| 10 | 1.68 | 0.52 |
| 16 | >2 | 0.56 |
| 20 | | 0.60 |
| 25 | | 0.62 |
| 30 | | 0.66 |
| 35 | | 0.71 |

$^1$H NMR examination indicated that the end groups were mainly N-acetyl groups as indicated below

| Sample | End-groups per 100 repeat units | |
|---|---|---|
| | N-acetyl | Amine |
| Dried 110 °C in vacuo overnight | 8.3 | 0.8 |
| Dried 300 °C for 3 hr. | 6.6 | 0.2 |

## Comparative Example F

Comparative Example E was repeated using 4% excess diamine.

m-ESEDA (22.49 g, 0.052M) was dissolved in anhydrous dimethyl acetamide (120 ml) under nitrogen with mechanical stirring. PMDA 10.91 g (0.05M) was added at room temperature and washed in with dimethyl acetamide (20 ml). The reaction mixture was stirred at 20-25 °C for 3.5 hrs. A sample of the polyamic acid solution (50 ml) was precipitated into demineralised water, washed with water (3x) and dried at 110 °C overnight. A 1% solution of the polyamic acid in dimethyl acetamide had an RV of 0.26 dlg$^{-1}$.

The remaining polyamic acid solution was added dropwise to a stirred solution of dimethyl acetamide (50 ml), pyridine (50 ml) and acetic anhydride (50 ml, 0.525M) at 80-95 °C. After 1 hr at 100 °C the solution was left to cool overnight. The precipitated polyimide was filtered and washed with boiling methanol (3x500 ml) and dried at 110 °C in vacuo overnight. A film moulded at 350 °C had an IV of 0.29 $dlg^{-1}$ in $H_2SO_4$.

The melt stability was examined at 370 °C in a ram extruder with a shear rate of 1000 $sec^{-1}$. A sample which had been heated to 300 °C for 3 hrs was also examined.

| Time (mins) | | Viscosity ($kNsm^{-2}$) | |
|---|---|---|---|
| | | (dried 110 °C) | dried 300 °C) |
| 5 | (Initial value) | 0.7 | 0.8 |
| 35 | | 1.3 | >2 |

These results indicate substantial instability.

## EXAMPLE 8

m-ESEDA (22.49 g, 0.052M) was dissolved in anhydrous dimethyl acetamide (120 ml) under nitrogen with mechanical stirring. PMDA 10.91g, (0.05M) was added at room temperature and washed in with dimethyl acetamide (30 ml). The reaction mixture was stirred at 20-25 °C for 3 hrs. Phthalic anhydride (1.774 g, 0.012M) was added and washed in with dimethyl acetamide. After 1.5 hrs a sample of the polyamic acid solution was removed. This had an RV of 0.63 $dlg^{-1}$ in dimethyl acetamide. The remaining polyamic acid solution was slowly added, over 45 mins, to a stirred solution of dimethyl acetamide (50 ml), pyridine (50 ml) and acetic anhydride (50 ml, 0.525M) at 80-95 °C. After 1 hr at 100 °C the solution was left to cool overnight. The precipitated polyimide was filtered and washed with boiling methanol (3 x 500 ml) and dried at 130 °C in vacuo overnight.

The melt stability was examined at 370 °C in a ram extruder with a shear rate of 1000 $sec^{-1}$. The initial melt viscosity (after 5 minutes) was 1.04 $kNs/m^2$ rising to 1.09 after a further 30 minutes.

## Claims

1. A melt stable, thermoformable polyimide having a melt viscosity measured at a shear rate of 1000 $sec^{-1}$ of less than 2 kNs/m comprising a polyimide of repeat unit of formula

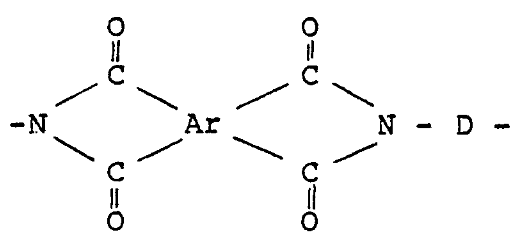

where Ar is a tetravalent aromatic radical derived from a dianhydride or corresponding derivative, selected from pyromellitic dianhydride, benzophenone dianhydride, biphenyl dianhydride, diphenyl ether dianhydride, diphenyl sulphone dianhydride and hexafluoropropylidene diahydride and D is a divalent organic radical derived from amines of formula

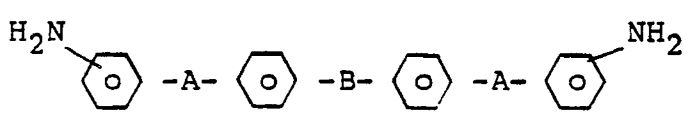

where A is O or S, the terminal covalent bonds are in meta positions with respect to A and B is $-SO_2-$, -CO-,

or a direct link,

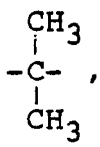 , 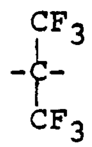

and wherein up to 50 mole % of the radicals D may be replaced by divalent organic radicals derived from other diamines characterised in that the end groups in the polyimide are essentially all unsubstituted aromatic rings.

2. A melt stable, thermoformable polyimide according to claim 1 in which the number of reactive end groups is less than 1.5 per 100 repeat units of the polyimide.

3. A melt stable, thermoformable polyimide according to either of claims 1 and 2 wherein Ar is a tetravalent aromatic radical derived from pyromellitic dianhydride or the corresponding diester diacid.

4. A melt stable, thermoformable polyimide according to any one of claims 1 to 3 wherein at least 50 mole % of the radicals D are derived from 4,4′-bis(3 amino phenoxy) diphenyl sulphone.

5. A process of forming a melt stable, thermoformable polyimide according to claim 1 comprising reacting a dianhydride, or corresponding derivative, selected from pyromellitic dianhydride, benzophenone dianhydride, biphenyl dianhydride, diphenyl ether dianhydride, diphenyl sulphone dianhydride and hexafluoropropylidene diahydride and at least one amine of formula

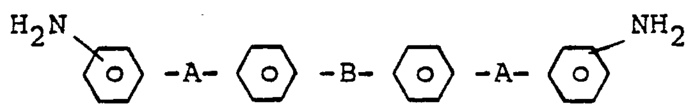

where A is O or S, the terminal covalent bonds are in meta positions with respect to A and B is $-SO_2-$, -CO-, or a direct link,

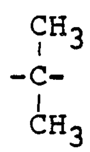 , 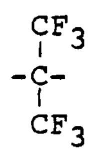

wherein, optionally, up to 50 mole % of these diamines may be replaced by divalent organic radicals derived from other diamines, cyclising the product to a polyimide in the presence of an excess of a monofunctional end-capping reagent under conditions which result in the polyimide having essentially all its end groups in the form of unsubstituted aromatic rings.

6. A process according to claim 5 wherein at least a 25% molar excess of end capping reagent is used.

7. A process according to either of claims 5 or 6 wherein the cyclisation and end-capping reactions are done whilst the product is maintained in solution.

8. A process of producing a reinforced composite structure having a melt stable polyimide matrix comprising impregnating a fibrous structure of continuous collimated filaments in unidirectional or woven fabric form in a continuous process by passing the structure through a solution of a melt stable polyimide or precursor thereof, urging the impregnated structure against a succession of heated surfaces, the temperatures of the surfaces being controlled and the position of the surfaces being located whereby both sides of the impregnated structure are in turn urged against the heated surfaces to cause condensation and cyclisation of any precursor materials and evolution of the solvent and any volatile by-products whilst urging the impregnated structure against the heated surfaces at a temperature which maintains the polyimide matrix in molten form.

9. A melt stable, thermoformable, reinforced, polyimide composite material comprising a polymer according to any one of claims 1 to 4 together with from 2 to 70% by weight of particulate or fibrous filler.

10. A reinforced composite material according to claim 9 which contains from 2 to 70% by weight of fibrous reinforcing filler.

11. Injection mouldable pellets of a composite material according to either of claim 9 or claim 10.

12. A reinforced composite material according to claim 10 wherein the fibrous reinforcement comprises continuous collimated filaments in the form of unidirectional filaments or in the form of a woven fabric.

13. Shaped articles formed from the products of any one of claims 1 to 4 and claims 9 to 12.

14. Shaped articles formed in a process comprising melt extruding a polyimide according to any one of claims 1 to 4.

Neu eingereicht / Newly filed
Nouvellement déposé

Fig. 1.

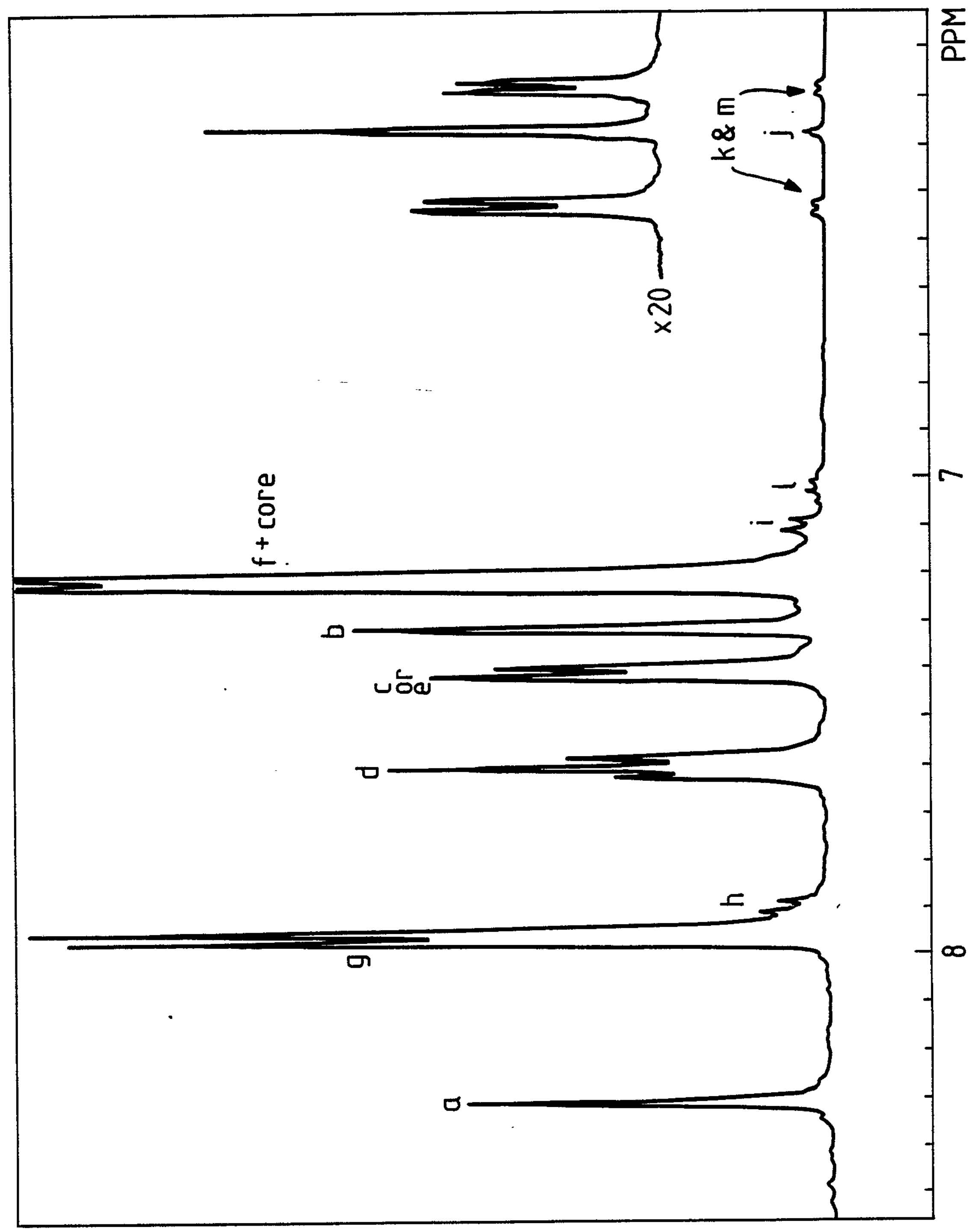

Neu eingereicht / Newly filed
Nouvellement déposé

Fig. 2.